# EUROPÄISCHE PATENTSCHRIFT

(11) **EP 3 381 662 B1**
(45) Veröffentlichungstag und Bekanntmachung des Hinweises auf die Patenterteilung: **25.11.2020**
(21) Anmeldenummer: 17163244.1
(22) Anmeldetag: 28.03.2017
(51) Int. Cl.: B29C 65/22, B65B 31/02, B65B 51/14

(54) **SIEGELSCHIENENTEMPERATURKOMPENSATION**
SEALING RAIL TEMPERATURE COMPENSATION
COMPENSATION DE TEMPÉRATURE DE BARRE DE SOUDURE

(43) Veröffentlichungstag der Anmeldung: 03.10.2018
(73) Patentinhaber: MULTIVAC Sepp Haggenmüller SE & Co. KG, 87787 Wolfertschwenden (DE)
(72) Erfinder: EBERLE, Alexander, 87448 Waltenhofen (DE); KURZ, Andreas, 87700 Memmingen (DE)
(74) Vertreter: Grünecker Patent- und Rechtsanwälte PartG mbB

(56) Entgegenhaltungen:
- EP-A1- 0 398 306
- EP-A1- 3 130 447
- EP-A1- 3 130 448
- EP-A2- 1 925 556
- DE-A1-102011 013 643
- DE-A1-102012 003 111
- JP-A- H0 939 920
- US-A1- 2015 113 915

## Beschreibung

Die Erfindung bezieht sich auf eine Vakuumkammermaschine zum Siegeln von Verpackungen, insbesondere Beuteln, gemäß dem Oberbegriff des Anspruchs 1 sowie auf ein Verfahren gemäß Anspruch 7.

Aus der DE 102012003111 A1 ist eine Vakuumkammermaschine bekannt, die dazu eingesetzt wird, insbesondere Lebensmittel in Beuteln zu versiegeln, um diese sicher zu verpacken und die Haltbarkeitsdauer von verderblichen Gegenständen zu verlängern. Um eine Konstanz der Siegeltemperatur bzw. der Siegelbandtemperatur zu gewährleisten, kann zur Temperaturerfassung ein Temperatursensor in der Siegelschiene vorgesehen sein, anhand dessen eine Steuerung für die vorgesehene, vorzugsweise konstante, Siegelbandtemperatur sorgt.

Aufgabe der vorliegenden Erfindung ist es, eine vereinfachte Vakuumkammermaschine zum Versiegeln von Beuteln zur Verfügung zu stellen, die mit konstruktiv möglichst einfachen Mitteln einen sicheren Betrieb mit Lebensmitteln ermöglicht.

Diese Aufgabe wird gelöst durch eine Vakuumkammermaschine mit den Merkmalen des Anspruchs 1 sowie ein Verfahren gemäß Anspruch 7. Vorteilhafte Weiterbildungen der Erfindung sind in den Unteransprüchen angegeben.

Die Erfindung bezieht sich auf eine Verpackungsmaschine in Form einer Vakuumkammermaschine zum Siegeln von Beuteln mit einer Siegelschiene, wobei die Siegelschiene ein elektrisch leitendes Siegelband umfasst, wobei die Vakuumkammermaschine eine Steuerung aufweist, die eine Heizvorrichtung für das Siegelband ansteuert. Die Vakuumkammermaschine zeichnet sich dadurch aus, dass die Steuerung dazu konfiguriert ist, beispielsweise unter Einsatz einer zum mathematischen Integrieren konfigurierten Recheneinheit (Integrationseinheit), in Abhängigkeit von einer in die Siegelschiene eingebrachten elektrischen Energie durch bereits zuvor stattgefundenen Siegelprozesse eine Dauer einer Aufheizzeit für das Siegelband vorzugeben. Dabei ist diese elektrische Energie proportional oder sogar entsprechend einer über das Siegelband in die Siegelschiene eingebrachte Wärme, die somit zu einer veränderlichen Temperatur der Siegelschiene selbst führt. Die Integrationseinheit bzw. die Steuerung kennt die über einen zu betrachtenden Zeitabschnitt durchgeführten Siegelprozesse und kann somit mittels hinterlegter Werte eine theoretische elektrische Energie bzw. eine Erwärmung der Siegelschiene ableiten. Die Steuerung gibt in Abhängigkeit von dieser in die Siegelschiene eingebrachten elektrischen Energie bzw. Wärme eine Dauer einer Aufheizzeit für das Siegelband vor bzw. steuert diese entsprechend. Dies ermöglicht eine korrigierte bzw. verkürzte Aufheizzeit, falls bereits einige Siegelvorgänge zuvor ausgeführt wurden und somit die Siegelschiene eine Temperaturerhöhung erfahren hat, und führt somit zu einem sicheren, reproduzierbaren Siegelprozess ohne Einsatz eines Temperatursensors an der Siegelschiene oder am Siegelband. Ein Einfluss durch eine Temperaturerhöhung der Siegelschiene kann dadurch kompensiert werden. So wird der Nachteil vermieden, dass bisher eine festeingestellte Vorheizzeit zu einer erhöhten und evtl. nicht zulässigen Temperatur am Siegelband führen und die Qualität der Beutelsiegelung negativ beeinflussen konnte.

Vorzugsweise ist die Integrationseinheit dazu konfiguriert, anhand kontinuierlicher oder intervallartiger Messung einer Versorgungsspannung oder einer Sekundärspannung der Heizvorrichtung eine innerhalb eines vorgegebenen Zeitraums in die Siegelschiene eingebrachte elektrische Leistung und durch Integrieren derselben die eingebrachte elektrische Energie zu bestimmen. Dies führt zu einer exakteren Bestimmung der elektrischen Energie, da die Versorgungsspannung an der Heizvorrichtung beispielsweise zwischen 190 V und 240 V bzw. zwischen 90 V und 130 V schwanken kann und somit auf die realen Spannungs- und Stromverhältnisse reagiert werden kann.

Dabei ist in einer besonders vorteilhaften Ausführung ein Spannungsfühler zum Erfassen der Versorgungsspannung oder der Sekundärspannung an der Heizvorrichtung vorgesehen, der mit der Steuerung verbunden ist, um sowohl die Aufheizzeit als auch die Temperatur des Siegelbands beim Siegeln prozesssicher zu steuern.

Alternativ zur Spannungsmessung ist die Steuerung oder speziell die Integrationseinheit dazu konfiguriert, bevorzugt anhand einer Strommessung an der Heizvorrichtung eine innerhalb eines vorgegebenen Zeitraums in die Siegelschiene eingebrachte elektrische Energie zu bestimmen.

Bevorzugt ist die Heizvorrichtung ein Transformator.

Die Steuerung beinhaltet vorzugsweise eine mathematische Simulation des Wärmeverhaltens der Siegelschiene und des Siegelbands, um sensorlos bezogen auf die Siegeltemperatur eine reproduzierbare Siegeltemperatur zu ermöglichen. Die mathematische Simulation berücksichtigt dabei die Wärmekapazität der Siegelschiene und des Siegelbands sowie den Wärmeübergangswiderstand vom Siegelband zu Siegelschiene und den Wärmeübergangswiderstand von der Siegelschiene zur Umgebung. Der Wärmeeintrag in das Siegelband entspricht dabei einer elektrischen Energie.

Die Erfindung bezieht sich auf ein Verfahren zum Betrieb einer Vakuumkammermaschine zum Siegeln von Beuteln mit einer ein Siegelband aufweisenden Siegelschiene, einer Heizvorrichtung für das Siegelband und einer Steuerung. Das erfindungsgemäße Verfahren zeichnet sich dadurch aus, dass in Abhängigkeit von einer in die Siegelschiene eingebrachten elektrischen Energie durch bereits zuvor stattgefundenen Siegelprozesse eine Aufheizzeit für das Siegelband, während derer die Heizvorrichtung das Siegelband mit Heizstrom versorgt, in der Steuerung ermittelt und eingestellt wird, um ohne direkte Messung einer Temperatur einen reproduzierten Siegelprozess zu gewährleisten.

In einer besonders vorteilhaften Ausführung wird kontinuierlich oder intervallartig eine Versorgungsspannung oder eine Sekundärspannung der Heizvorrichtung gemessen, wobei die Steuerung durch Integration der während eines vorgegebenen Zeitraums gemessenen Spannungswerte eine während dieses Zeitraums in die Siegelschiene eingebrachten elektrischen Energie ermittelt, um eine noch exaktere Ermittlung der elektrischen Energie zu erreichen. Somit kann ein noch prozesssichererer Siegelprozess erreicht werden.

In einer vorteilhaften Variante wird der Heizstrom der Heizvorrichtung gemessen und die Steuerung ermittelt durch Integration der während eines vorgegebenen Zeitraums gemessenen Stromwerte eine während dieses Zeitraums in die Siegelschiene eingebrachte elektrische Energie.

In einer vorteilhaften Ausführung liegt der Ermittlung der Aufheizzeit und der Siegelzeit eine mathematische Simulation des Wärmeverhaltens der Siegelschiene und des Siegelbands zugrunde.

Vorzugsweise wird eine Siegelzeit über den zeitlichen Verlauf der elektrischen Energie eingestellt, um die Siegelqualität positiv beeinflussen zu können.

Im Folgenden wird ein vorteilhaftes Ausführungsbeispiel der Erfindung anhand einer Zeichnung näher erläutert. Im Einzelnen zeigen:
- Figur 1: eine perspektivische Ansicht einer erfindungsgemäßen Vakuumkammermaschine und
- Figur 2: ein schematisches Diagramm von einer Siegeltemperatur und einer elektrischen Leistung über die Zeit.

Gleiche Komponenten sind in den Figuren durchgängig mit gleichen Bezugszeichen versehen.

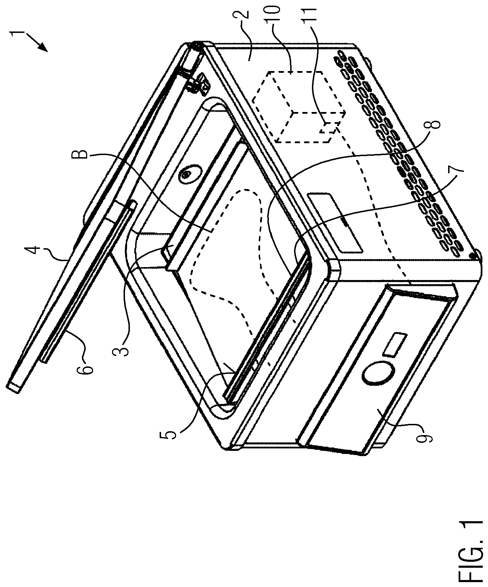

Figur 1 zeigt in perspektivischer Ansicht eine erfindungsgemäße Vakuumkammermaschine 1 zum Siegeln von Beuteln B. Die Vakuumkammermaschine 1 verfügt über ein Gehäuse 2, einen Kammerboden 3 (ggf. in Form eines Einlegeblechs) und einen Deckel 4. Weiter nimmt das Gehäuse 2 eine Siegelschiene 5 auf, die so konfiguriert ist, dass sie mit einer Gegendruckschiene 6 zusammenwirkt, wenn der Deckel 4 geschlossen wird. Die Gegendruckschiene 6 ist hierzu auf der Unterseite des Deckels 4, d.h. auf der dem Kammerboden 3 zugewandten Seite des Deckels 4, angeordnet.

Im Folgenden wird die Funktion der Vakuumkammermaschine 1 näher erläutert. In die perspektivisch dargestellte Vakuumkammermaschine 1 wird ein Beutel B, der einen zu verpackenden Gegenstand beinhaltet, eingelegt. Hierzu wird der Kunststoff als Material aufweisende Beutel B so auf dem Kammerboden 3 aufgelegt, dass der zu versiegelnde Bereich des Beutels B auf der Siegelschiene 5, insbesondere auf einer Siegelfläche 7, aufliegt. Die Siegelfläche 7 wird durch ein erwärmbares Siegelband 8 definiert. Um den Beutel zu evakuieren und anschließend zu versiegeln, wird der Deckel 4 geschlossen. Dadurch wirkt die Siegelschiene 5 so mit der Gegendruckschiene 6 zusammen, dass der zu versiegelnde Beutel B zwischen der Siegelschiene 5 und der Gegendruckschiene 6 gehalten wird. Es verbleibt jedoch ein Spalt, so dass der Beutel B nicht vollständig verschlossen ist, sondern weiter eine Öffnung zum Evakuieren aufweist.

Bei geschlossenem Deckel 4 wird das Innere der Vakuumkammermaschine 1 evakuiert, wodurch auch der Beutel selbst evakuiert wird. Während die Siegelschiene 5 zusätzlich gegen die Gegendruckschiene 6 bewegt wird und der verbleibende Spalt geschlossen wird, wird das Siegelband 8 der Siegelschiene 5 soweit erhitzt, dass der zu versiegelnde Beutel B im Siegelbereich aufgeschmolzen wird. So entsteht durch die Wärme- und Druckeinwirkung eine qualitativ hochwertige Siegelnaht am Beutel B.

Die Vakuumkammermaschine 1 umfasst des Weiteren eine Steuerung 9 und einen Transformator 10 als Heizvorrichtung für das Siegelband 8. Die Steuerung 9 erfasst mittels eines Spannungsfühlers 11 die Primär- oder Sekundärspannung am Transformator 10, um eine vorgegeben Siegeltemperatur am Siegelband 8 zu erzeugen.

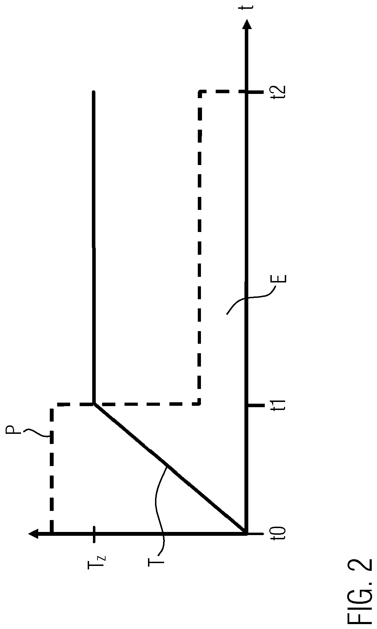

Figur 2 zeigt ein schematisches Diagramm von einer Siegeltemperatur T und einer elektrischen Leistung P über die Zeit. Zum Zeitpunkt t0 ist der Deckel 4 geschlossen und der Siegelprozess beginnt mit dem Aufheizen des Siegelbands 8. Gleichzeitig läuft der Evakuiervorgang. Dabei wird die maximale elektrische Leistung P vom Transformator 10 genutzt. Zum Zeitpunkt t1 ist die Aufheizzeit beendet und die Zieltemperatur T_{z} des Heizbands 8 erreicht. Die Siegelzeit zum Versiegeln des Beutels ist durch die Zeit zwischen t1 und t2 definiert. Während dieser Zeit wird die durchschnittliche elektrische Leistung P verringert (z. B. durch Verringern der Stromstärke) und von der Steuerung 9 derart gesteuert, dass das Siegelband 8 die vorgegebene Siegeltemperatur T_{z} hält und ein reproduzierbares Siegelergebnis gewährleistet ist. Für eine konstante Temperatur T_{z} müssen sich die zugeführte Energie und die abfließende Wärme in den Beutel B und die Siegelschiene die Waage halten. Dabei kann die Steuerung 9 mittels unterschiedlicher Verfahren das Siegelband 8 aufheizen. Beispielsweise sind eine zeitliche Abfolge der Pulse der Heizvorrichtung 10 durch Vorgabe eines Einschaltverhältnisses innerhalb einer gegebenen Periodendauer gemäß einer Pulsweitenmodulation oder durch einen kontinuierlichen Vergleich der Pulse mit einem zeitlichen Mittelwert über einen Integrator gemäß einer Delta-Sigma-Modulation denkbar.

Um ohne einen Temperatursensor an der Siegelschiene 5 oder am Siegelband 8 die Aufheizzeit zu ermitteln, bis die vorgegebene Siegeltemperatur erreicht ist, ist in einer in der Steuerung 9 vorgesehenen und nicht näher dargestellten Integrationseinheit eine mathematische Simulation implementiert, die die Wärmekapazität der Siegelschiene und des Siegelbands 8 sowie den Wärmeübergangswiderstand vom Siegelband 8 zu Siegelschiene 5 und den Wärmeübergangswiderstand von der Siegelschiene 5 zur Umgebung berücksichtigt. Der Wärmeeintrag in das Siegelband 8 entspricht dabei einer elektrischen Energie E. In Figur 2 entspricht die elektrische Energie E dem Flächenintegral unter der Kurve P, d. h. dem Verlauf der elektrischen Leistung P.

Die Aufheizzeit ist umgekehrt proportional zur in die Siegelschiene 5 eingebrachten elektrischen Leistung. Das heißt, je wärmer also die Siegelschiene 5 durch häufiges wiederholtes Siegeln in kurzer Zeit ist, desto kürzer ist die nachfolgende Aufheizzeit, um eine gleichbleibende Siegelqualität zu gewährleisten.

## Patentansprüche

1. Vakuumkammermaschine (1) zum Siegeln von Beuteln (B) mit einer Siegelschiene (5), wobei die Siegelschiene (5) ein elektrisch leitendes Siegelband (8) umfasst, wobei die Vakuumkammermaschine (1) eine Steuerung (9) aufweist, die eine Heizvorrichtung (10) für das Siegelband (8) ansteuert, **dadurch gekennzeichnet, dass** die Steuerung (9) dazu konfiguriert ist, in Abhängigkeit von einer in die Siegelschiene (5) eingebrachten elektrischen Energie (E) durch bereits zuvor stattgefundenen Siegelprozesse eine Dauer einer Aufheizzeit für das Siegelband (8) vorzugeben.

2. Vakuumkammermaschine nach Anspruch 1, **dadurch gekennzeichnet, dass** die Steuerung (9) dazu konfiguriert ist, anhand kontinuierlicher oder intervallartiger Messung einer Versorgungsspannung oder einer Sekundärspannung der Heizvorrichtung (10) eine innerhalb eines vorgegebenen Zeitraums in die Siegelschiene (8) eingebrachte elektrische Energie (E) zu bestimmen.

3. Vakuumkammermaschine nach Anspruch 2, **dadurch gekennzeichnet, dass** ein Spannungsfühler (11) zum Erfassen der Versorgungsspannung oder der Sekundärspannung an der Heizvorrichtung (10) vorgesehen ist, der mit der Steuerung (9) verbunden ist.

4. Vakuumkammermaschine nach Anspruch 1, **dadurch gekennzeichnet, dass** die Steuerung (9) dazu konfiguriert ist, anhand einer Strommessung an der Heizvorrichtung eine innerhalb eines vorgegebenen Zeitraums in die Siegelschiene (8) eingebrachte elektrische Energie (E) zu bestimmen.

5. Vakuumkammermaschine nach einem der vorangehenden Ansprüche, **dadurch gekennzeichnet, dass** die Heizvorrichtung (10) ein Transformator ist.

6. Vakuumkammermaschine nach einem der vorangehenden Ansprüche, **dadurch gekennzeichnet, dass** die Steuerung (9) eine mathematische Simulation des Wärmeverhaltens der Siegelschiene (5) und des Siegelbands (8) umfasst.

7. Verfahren zum Betrieb einer Vakuumkammermaschine (1) zum Siegeln von Beuteln (B) mittels einer ein Siegelband (8) aufweisenden Siegelschiene (5), einer Heizvorrichtung (10) für das Siegelband (8) und einer Steuerung (9),
**dadurch gekennzeichnet, dass** in Abhängigkeit von einer in die Siegelschiene (5) eingebrachten elektrischen Energie (E) durch bereits zuvor stattgefundenen Siegelprozesse eine Aufheizzeit für das Siegelband (8), während derer die Heizvorrichtung (10) das Siegelband (8) mit Heizstrom versorgt, in der Steuerung (9) ermittelt und eingestellt wird.

8. Verfahren nach Anspruch 7, **dadurch gekennzeichnet, dass** kontinuierlich oder intervallartig eine Versorgungsspannung oder eine Sekundärspannung der Heizvorrichtung (10) gemessen wird, wobei die Steuerung (9) durch Integration der während eines vorgegebenen Zeitraums gemessenen Spannungswerte eine während dieses Zeitraums in die Siegelschiene (5) eingebrachten elektrischen Energie (E) ermittelt.

9. Verfahren nach Anspruch 7, **dadurch gekennzeichnet, dass** der Heizstrom der Heizvorrichtung (10) gemessen wird und die Steuerung (9) durch Integration der während eines vorgegebenen Zeitraums gemessenen Stromwerte eine während dieses Zeitraums in die Siegelschiene (5) eingebrachten elektrischen Energie (E) ermittelt.

10. Verfahren nach einem der vorangehenden Ansprüche 7 bis 9, **dadurch gekennzeichnet, dass** der Ermittlung der Aufheizzeit und der Siegelzeit eine mathematische Simulation des Wärmeverhaltens der Siegelschiene (5) und des Siegelbands (8) zugrunde gelegt wird.

11. Verfahren nach einem der vorangehenden Ansprüche 7 bis 10, **dadurch gekennzeichnet, dass** eine Siegelzeit abhängig von einem zeitlichen Verlauf der elektrischen Leistung (P) eingestellt wird.

## Claims

1. Vacuum chamber machine (1) for sealing pouches (B) with a sealing bar (5), wherein the sealing bar (5) comprises an electrically conductive sealing band (8), wherein the vacuum chamber machine (1) has a controller (9) controlling a heating device (10) for the sealing band (8), **characterized in that** the controller (9) is configured to specify a duration of a heating time for the sealing band (8) in dependency of an electrical energy (E) introduced into the sealing bar (5) by sealing processes that happened already previously.

2. Vacuum chamber machine according to claim 1, **characterized in that** the controller (9) is configured to determine an electrical energy (E) introduced into the sealing bar (8) within a specified time range by continuous or intermittent measurement of a supply voltage or a secondary voltage of the heating device (10).

3. Vacuum chamber machine according to claim 2, **characterized in that** a voltage sensor (11) that is connected with the controller (9) is provided for obtaining the supply voltage or the secondary voltage at the heating device (10).

4. Vacuum chamber machine according to claim 1, **characterized in that** the controller (9) is configured to determine an electrical energy (E) introduced into the sealing bar (8) within a specified time range based on a current measurement at the heating device.

5. Vacuum chamber machine according to any one of the preceding claims, **characterized in that** the heating device (10) is a transformer.

6. Vacuum chamber machine according to any one of the preceding claims, **characterized in that** the controller (9) comprises a mathematical simulation of the heat behavior of the sealing bar (5) and the sealing band (8).

7. Method for operating a vacuum chamber machine (1) for sealing pouches (B) with a sealing bar (5) comprising a sealing band (8), with a heating device (10) for the sealing band (8), and with a controller (9),
**characterized in that** a heating time for the sealing band (8), during which the heating device (10) supplies the sealing band (8) with heating current, is determined and set in the controller (9) in dependency of an electrical energy introduced into the sealing bar (5) by sealing processes that happened already previously.

8. Method according to claim 7, **characterized in that** a supply voltage or a secondary voltage of the heating device (10) is measured continuously or intermittently, wherein the controller (9) determines, by integration of the voltage values measured during a specified time range, an electrical energy (E) introduced into the sealing bar (5) during that time range.

9. Method according to claim 7, **characterized in that** the heating current of the heating device (10) is measured and the controller (9) determines, by integration of current values measured during a specified time range, an electrical energy (E) introduced into the sealing bar (5) during that time range.

10. Method according to any one of claims 7 to 9, **characterized in that** determination of the heating time and the sealing time is based on a mathematical simulation of the heating behavior of the sealing bar (5) and the sealing band (8).

11. Method according to any one of preceding claims 7 to 10, **characterized in that** a sealing time is set in dependency of a temporal development of the electrical power (P).

## Revendications

1. Machine à chambre à vide (1) pour le soudage de sacs (B) avec une barre de soudure (5), la barre de soudure (5) comprenant une bande de soudure (8) conductrice de l'électricité, la machine à chambre à vide (1) ayant une commande (9) qui commande un dispositif de chauffage (10) pour la bande de soudure (8), **caractérisée en ce que** l'unité de commande (9) est configurée pour prérégler une durée d'un temps de chauffage de la bande de soudure (8) en fonction d'une énergie électrique (E) introduite dans la barre de soudure (5) par des processus de soudure qui ont déjà eu lieu précédemment.

2. Machine à chambre à vide selon la revendication 1, **caractérisée en ce que** l'unité de commande (9) est configurée pour déterminer une énergie électrique (E) introduite dans la barre de soudure (8) dans une période de temps prédéterminée au moyen d'une mesure continue ou par intervalles d'une tension d'alimentation ou d'une tension secondaire du dispositif de chauffage (10).

3. Machine à chambre à vide selon la revendication 2, **caractérisée en ce qu'**un capteur de tension (11) pour détecter la tension d'alimentation ou la tension secondaire est prévu sur le dispositif de chauffage (10), qui est relié à l'unité de commande (9).

4. Machine à chambre à vide selon la revendication 1, **caractérisée en ce que** l'unité de commande (9) est configurée pour déterminer, sur la base d'une mesure de courant au niveau du dispositif de chauffage, une énergie électrique (E) introduite dans la barre de soudure (8) dans une période de temps prédéterminée.

5. Machine à chambre à vide selon l'une des revendications précédentes, **caractérisée en ce que** le dispositif de chauffage (10) est un transformateur.

6. Machine à chambre à vide selon l'une des revendications précédentes, **caractérisée en ce que** la commande (9) comprend une simulation mathématique du comportement thermique de la barre de soudure (5) et de la bande de soudure (8).

7. Procédé de fonctionnement d'une machine à chambre à vide (1) pour la fermeture de sacs (B) au moyen d'une barre de soudure (5) comportant une bande de soudure (8), un dispositif de chauffage (10) pour la bande de soudure (8) et une commande (9),
**caractérisé en ce qu'**un temps de chauffage de la bande de soudure (8), pendant lequel le dispositif de chauffage (10) alimente la bande de soudure (8) en courant de chauffage, est déterminé et réglé dans l'unité de commande (9) en fonction de l'énergie électrique (E) introduite dans la barre de soudure (5) par les processus de soudure qui ont déjà eu lieu précédemment.

8. Procédé selon la revendication 7, **caractérisé en ce qu'**une tension d'alimentation ou une tension secondaire du dispositif de chauffage (10) est mesurée en continu ou par intervalles, l'unité de commande (9) déterminant une énergie électrique (E) introduite dans la barre de soudure (5) pendant cette période en intégrant les valeurs de tension mesurées pendant une période prédéterminée.

9. Procédé selon la revendication 7, **caractérisé en ce que** le courant de chauffage du dispositif de chauffage (10) est mesuré et l'unité de commande (9) détermine une énergie électrique (E) introduite dans la barre de soudure (5) pendant cette période en intégrant les valeurs de courant mesurées pendant une période prédéterminée.

10. Procédé selon l'une des revendications précédentes 7 à 9, **caractérisé en ce que** la détermination du temps de chauffage et du temps de soudure est fondée sur une simulation mathématique du comportement thermique de la barre de soudure (5) et de la bande de soudure (8).

11. Procédé selon l'une des revendications précédentes 7 à 10, **caractérisé en ce qu'**un temps de soudure est fixé en fonction d'une variation de la puissance électrique (P) dans le temps.
